# EUROPÄISCHE PATENTSCHRIFT

(11) **EP 0 470 067 B1**
(45) Veröffentlichungstag und Bekanntmachung des Hinweises auf die Patenterteilung: **06.03.1996**
(21) Anmeldenummer: 91890164.6
(22) Anmeldetag: 25.07.1991
(51) Int. Cl.: C21C 5/56, C21C 5/42, F23G 5/08

(54) **Verfahren zum Erschmelzen von Stahl sowie Einrichtung zur Durchführung dieses Verfahrens**
Process and installation for melting steel
Procédé et dispositif pour la fusion d'acier

(30) Priorität: 26.07.1990 AT 1569/90; 03.08.1990 AT 1643/90; 16.08.1990 AT 1699/90
(43) Veröffentlichungstag der Anmeldung: 05.02.1992
(73) Patentinhaber: Seirlehner, Leopold, Dipl.-Ing., A-4020 Linz (AT); Winkler, Manfred, A-4501 Neuhofen (AT)
(72) Erfinder: Nieder, Wolfgang, Dipl.-Ing., A-4040 Linz (AT); Seirlehner, Leo, Dipl.-Ing., A-4040 Linz (AT); Pirklbauer, Wilfried, Dr., A-4491 Niederneukirchen (AT); Weber, Alfred, A-4222 St. Georgen (AT); Auer, Johann, A-4490 St. Florian (AT); Winkler, Manfred, A-4050 Traun (AT)
(74) Vertreter: Haffner, Thomas M., Dr.

(56) Entgegenhaltungen:
- EP-A- 0 313 547
- DE-B- 2 450 495
- DE-B- 2 504 889
- DE-C- 3 722 645

## Beschreibung

Die Erfindung bezieht sich auf ein Verfahren zum Erschmelzen von Stahl aus Schrott und/oder metallhaltigen, müllähnlichen Stoffen, wobei die Metallträger in einem Festbett eines Schmelzreaktors vorgewärmt und aufgeschmolzen werden, die Schmelze in ein Raffinationsgefäß übergeführt wird und der C-Gehalt der Schmelze durch Zusatz von Kohlenstoff oder Kohlenstoffträgern angehoben wird, sowie auf eine Einrichtung zur Durchführung dieses Verfahrens mit einem Schmelzreaktor zum Aufschmelzen der Einsatzstoffe, wobei ein Raffinationsgefäß dicht mit dem Schmelzreaktor verbunden ist.

Zur Erzeugung einer flüssigen Stahlschmelze aus Schrott und/oder metallhaltigen, müllähnlichen Stoffen, insbesondere organisch oder anorganisch kontaminiertem Schrott, sind eine Reihe von Verfahren bekanntgeworden.

Ein Verfahren sowie eine Vorrichtung der eingangs genannten Art ist beispielsweise der DE-A-37 22 645 entnehmbar. Dieser bekannte Stand der Technik betrifft ein Stahlerzeugungsverfahren sowie eine Vorrichtung zum Einschmelzen von Schrott oder Eisenschwammpellets in vorreduzierter Form mit Zusätzen an Kohle oder festem Roheisen in einem stationären Einschmelzgefäß ausfließende Metall in einem ortsbeweglichen Auffanggefäß gesammelt wird. Bei diesem bekannten Verfahren erfolgt in der beweglichen Gießpfanne eine Entschwefelung und Abschlackung neben üblichen pfannenmetallurgischen Maßnahmen und es wird durch Einbringen von Legierungskomponenten in die Gießpfanne die endgültige Stahlqualität eingestellt. Hiebei wird insbesondere auf eine Energieeinsparung bei der Durchführung dieses Verfahrens abgezielt.

Weitere bekannte Schrottschmelzverfahren verwenden als Einsatz Schrott bzw. weitgehend vorreduziertes Ausgangsmaterial und es ist bekannt, Schmelzreaktoren als Wirbelschichtreaktoren auszubilden, wobei in der Wirbelschicht unter reduzierenden Bedingungen geschmolzen wird. Bei derartigen Wirbelschichtreaktoren kann eine Reduktion des weitgehend vorreduzierten Ausgangsmaterials in der Wirbelschicht erzielt werden. Wenn auf eine derartige weitergehende Reduktion des Ausgangsmaterials mit Rücksicht auf den hohen Metallisationsgrad verzichtet werden kann, kann die Schmelzwärme in einem Schmelzreaktor in weitgehend beliebiger Weise aufgebracht werden. So ist es insbesondere bekannt, Schmelzreaktoren mit Erdgasbrennern zu beheizen. Es ist weiters bekannt, die Schmelzwärme durch elektrische Energie oder andere Energieträger aufzubringen.

Bei bekannten Schmelzreaktoren wurde bisher zur Verringerung des Energieverbrauches eine saure Schlackenführung gewählt. Durch eine derartige Schlackenführung wurde ein Rohstahl mit relativ geringem Kohlenstoffgehalt erschmolzen, wobei allerdings eine relativ aufwendige Reinigung der entstehenden Abgase erforderlich war.

Die Erfindung zielt nun darauf ab, ein Verfahren der eingangs genannten Art zu schaffen, mit welchem die Prozeßsteuerung erleichtert wird und die Treffsicherheit bei der Stahlherstellung verbessert wird. Insbesondere zielt die Erfindung hiebei gleichzeitig darauf ab, den Feuerfestmaterialverbrauch zu senken und den Eisenäbbrand bei gleichzeitiger Einhaltung der gewünschten Stahlzusammensetzung zu verringern. Zur Lösung dieser Aufgabe besteht das erfindungsgemäße Verfahren im wesentlichen darin, daß im Schmelzreaktor eine Schlackenbasizität zwischen 1,8 und 3 eingestellt wird und daß in die Schmelze Kohlenstoff in einer die Menge für die gewünschte Aufkohlung übersteigenden Menge und Sauerstoff eingebracht wird und daß überschüssiger Kohlenstoff vergast wird. Gemäß einer weiteren bevorzugten Ausführungsform wird so vorgegangen, daß der C-Gehalt der Schmelze durch Zusatz von Roheisen angehoben wird. Durch die Einstellung der Schlackenbasizität auf Werte zwischen 1,8 und 3, vorzugsweise 2 bis 2,2, wie sie durch Zugabe von Kalk erzielt werden kann, und durch entsprechende Aufkohlung des Bades zur Gewährleistung der Eisenoxidreduktion in einem nachgeschalteten Raffinationsgefäß wird eine Leistungserhöhung im nachgeschalteten Raffinationsgefäß sichergestellt, wobei der Feuerfestmaterialverbrauch verringert wird. Die Leistungserhöhung des Raffinationsprozesses führt hierbei zu einer Verbesserung der Rohstahlqualität und mit Rücksicht auf die Aufkohlung zu einer Absenkung der Liquidustemperatur des den Schmelzreaktor verlassenden Bades, wobei gleichzeitig ein geringerer Eisenabbrand sichergestellt wird. Der theoretische Nachteil einer Erhöhung des Energieverbrauches beim Betrieb des Schmelzreaktors wird hierbei durch die Vorteile bei der Führung des Verfahrens im nachfolgenden Raffinationsprozeß übertroffen, wobei die erfindungsgemäße Verfahrensführung nicht nur zu einer Verbesserung der Stahlqualität führt, sondern gleichzeitig auch die Möglichkeit bietet, durch entsprechende Gasführung, insbesondere die Rückführung von brennbaren Reaktionsgasen aus dem nachfolgenden Raffinationsprozeß, die Energiebilanz wesentlich zu verbessern. Erfindungsgemäß wird hierbei so vorgegegangen, daß in die Schmelze Kohlenstoff in einer die Menge für die gewünschte Aufkohlung übersteigenden Menge und Sauerstoff eingebracht wird. Aus dem Schmelzreaktor kann ein ständiger Schmelzfluß in ein nachfolgendes Konvertergefäß bzw. ein nachfolgendes Raffinationsgefäß aufrechterhalten werden, wobei die mit dem geschmolzenen Schrott mitlaufende Schlacke bei der Frischreaktion auch eine gute Entphosphorung und Entschwefelung sicherstellt.

Eine weitere Verbesserung der Energiebilanz läßt sich, wie es einer bevorzugten Weiterbildung des erfindungsgemäßen Verfahrens entspricht, dadurch erzielen, daß das gebildete Kohlevergasungsprodukt als Brenngas für das Vorwärmen und Aufschmelzen des Festbettes eingesetzt wird. Bei einer derartigen Verfahrensführung kann der Raffinationsprozeß im Raffinationsgefäß zweistufig geführt werden, wobei in einer ersten Verfahrensstufe eine Vergasungsreaktion und der Abbrand der Übermenge an eingeblasenem bzw. eingebrachtem Kohlenstoff abläuft und erst in einer zweiten Stufe die Frischreaktion zu Ende geführt wird. Das auf diese Weise gebildete Kohlevergasungsprodukt zeichnet sich durch einen hohen Heizwert und hohe Reinheit aus und kann unmittelbar als Brenngas für das Vorwärmen und Aufschmelzen des Festbettes eingesetzt werden.

Die in der ersten Phase auf Grund erhöhter Kohlenstoff- bzw. Sauerstoffzufuhr durchgeführte Kohlevergasung führt gleichzeitig zu einer Badaufkohlung, so daß unmittelbar auch der gewünschte Kohlenstoffgehalt des Stahles im Raffinationsprozeß eingestellt werden kann. Die für das Schrottschmelzen benötigte Energie kann mit dem erzeugten Kohlegas bei entsprechender Verfahrensführung weitestgehend abgedeckt werden. Durch eine kontinuierliche Betriebsweise der oben beschriebenen Art, läßt sich auch die Entsorgung der bei der Vergasung des Müllanteiles im Schrott anfallenden, staubbeladenden Abgase wesentlich erleichtern, wobei eine Teilentsorgung dieser Abgase durch Einblasen der Abgase in die Konverterschmelze, beispielsweise über Bodendüsen, oder durch Einblasen in den Unterteil des Schmelzreaktors erfolgen kann. Die Abwärme der Abgase kann zur Senkung des Gesamtenergiebedarfes auch beispielsweise durch Luftvorwärmung ausgenutzt werden. Durch die entsprechende Aufkohlung wird gleichzeitig der Eisenabbrand reduziert und es kann FeO in der Schlacke von üblicherweise 60 bis 70 Gew.-% auf 20 bis 30 Gew.-% abgesenkt werden. Dieser Vorteil ergibt sich insbesondere in Kombination mit der basischen Schlackenführung.

Mit Vorteil wird das erfindungsgemäße Verfahren so geführt, daß Kohlenstoff in die Schmelze in einer Menge eingebracht wird, die, insbesondere nach Ablauf der Vergasungsreaktion, einen Badkohlenstoffgehalt zwischen 0,3 Gew.-% und 1,8 Gew.-% ergibt, wobei unmittelbar ein Produkt mit gleichbleibender und hoher Qualität erzielt werden kann. Vorzugsweise wird hiebei so vorgegangen, daß Kohlenstoff in die Schmelze in einer Menge eingebracht wird, die nach Ablauf der Vergasungsreaktion einen Badkohlenstoffgehalt zwischen 0,5 Gew.-% und 1 Gew.-% ergibt. Gemäß einer weiters bevorzugten Ausführungsform wird hiebei so vorgegangen, daß Kohlenstoff in die Schmelze in einer Menge eingebracht wird, die nach Ablauf der Vergasungsreaktion einen Badkohlenstoffgehalt zwischen 0,7 Gew.-% bis 1 Gew.-% ergibt. Für eine Vergasungsreaktion muß eine entsprechende Übermenge an Kohlenstoff eingebracht werden, welche auch nach Beendigung der Vergasungsreaktion noch den gewünschten Kohlenstoffgehalt von bevorzugt 0,3 bis 1,8 Gew.-%, insbesondere von 0,5 bis 1 Gew.%, sicherstellt, um in der Folge die oben beschriebenen Vorteile der Verringerung des Fe-Abbrandes beim Frischen sicherzustellen. Zu diesem Zweck wird mit Vorteil, insbesondere nach Beendigung der Vergasungsreaktion, im Frischprozeß der FeO-Gehalt der Schlacke zwischen 20 und 30 Gew.-% durch Aufkohlung eingestellt wird, wobei die durch die basische Schlackenführung bedingte Erhöhung des Energieverbrauches im Schmelzprozeß in einfacher Weise dann kompensiert werden kann, wenn so vorgegangen wird, daß die Vergasungsreaktion der Kohle im Raffinationsgefäß durchgeführt wird und daß mit dem Kohlenstoff Sauerstoff in einer Menge in das Raffinationsgefäß eingeblasen wird, welche die gewünschte Vergasung des Kohlenstoffes und des Frischprozess bemessen ist. Insgesamt läßt sich mit der erfindungsgemäßen Verfahrensführung ein geschlossenes, metallurgisches System verwirklichen, wobei nur eine Abgas- und Entstaubungs- bzw. Entsorgungslinie für den Schmelzprozeß und den Raffinationsprozeß erforderlich ist. Der Großteil der bei der Müllvergasung entstehenden Schadstoffe kann bei der erfindungsgemäßen Verfahrensführung durch Rückführung und Verbrennung im Hochtemperaturbereich Schmelzreaktors entsorgt werden und der Stahl kann aus dem Raffinationsgefäß schlackenfrei abgestochen werden. Um die Bedingungen für die Steuerbarkeit des Prozesses und insbesondere die Treffsicherheit der Stahlherstellung voll zu gewährleisten, wird mit Vorteil so vorgegangen, daß das Raffinationsgefäß durch, insbesondere über der Schmelze angeordnete, Brenner beheizt wird.

Die erfindungsgemäße Einrichtung zur Durchführung dieses Verfahrens mit einem Schmelzreaktor zum Aufschmelzen der Einsatzstoffe, wobei ein Raffinationsgefäß dicht mit dem Schmelzreaktor verbunden ist, ist im Hinblick auf die gewünschte Rückführung von Vergasungsprodukten aus einem Raffinationsgefäß dadurch gekennzeichnet, daß im oberen Bereich des Raffinationsgefäßes in wenigstens einer Ebene Brenner und/oder Nachverbrennungsdüsen angeordnet sind. Eine dichte Ankopplung des Raffinationsgefäßes an den Schmelzreaktor bietet die Möglichkeit, im Raffinationsgefäß gebildete Kohlevergasungsprodukte gegebenenfalls auch unter überatmosphärischem Druck in den Schmelzreaktor rückzuführen, wobei die dichte Anbindung bzw. Ankopplung eine Betriebsweise unter überatmosphärischem Druck sicherstellen soll. Für die Einstellung metallurgisch optimaler Bedingungen für den Raffinationsprozeß sind erfindungsgemäß im oberen Bereich des Raffinationsgefäßes in wenigstens einer Ebene Brenner und/oder Nachverbrennungsdüsen angeordnet. Das Raffinationsgefäß ist hierbei im wesentlichen herdähnlich ausgebildet und weist einen deckelähnlichen Oberteil auf. Ein derartiger deckelähnlicher Oberteil kann erforderlichenfalls mittels eines speziellen Hebezeuges, beispielsweise einer Deckelhubeinrichtung, ausgeschwenkt werden. Im Deckel können hierbei weitere Öffnungen für Zuschläge, Lanzen sowie die verschließbare Abgasöffnung zum Abziehen der Gase, angeordnet sein. Das Raffinationsgefäß kann in konventioneller Weise, wie bei Elektroöfen üblich, über eine Wiege oder eine definierte Drehachse, die möglichst nahe der Eingußöffnung liegt, in Richtung Absticherker gekippt werden, wobei das Gefäß zum Abschlacken in Richtung Abschlacköffnung gekippt werden kann. Prinzipiell ist aber auch eine Wechselanlage für das Raffinationsgefäß möglich, wobei auch in diesem Falle ein entsprechend dichter Anschluß bzw. eine dichte Ankopplung an den Schmelzreaktor sichergestellt sein muß.

Die Konverterabgase, insbesondere die Produkte der Kohlevergasung, können aber auch in einer Nachverbrennungskammer genutzt werden und es kann eine Dampfkesselanlage zur Vorwärmung der Sekundär- und Brennerluft unter Nutzung des Energiepotentiales betrieben werden. Für die Rückführung der Konverterabgase bzw. der Vergasungsprodukte des Raffinationsreaktors in Düsen im Schmelzbereich des Schmelzreaktors bzw. zur Vorheizung des Schrottes im Schmelzreaktor, ist die erfindungsgemäße Einrichtung mit Vorteil so weitergebildet, daß an das Raffinationsgefäß eine Gasrückführungsleitung angeschlossen ist, welche mit den Brennern des Schmelzreaktors verbindbar ist. Um gegebenenfalls eine Betriebsweise unter überatmosphärischem Druck sicherzustellen, sind entsprechende Vorkehrungen bei der Ausgestaltung des Raffinationsgefäßes zu treffen, wobei vorzugsweise das Raffinationsgefäß wenigstens eine mit einem Verschluß ausgestattete Abstichöffnung und die Einlaßöffnung des Raffinationsgefäßes für die Schmelze als im Deckel geführter Kulissenschieber ausgebildet ist. Gemäß einer alternativen Ausführungsform kann erfindungsgemäß die Ausbildung so getroffen sein, daß die Einlaßöffnung des Raffinationsgefäßes für die Schmelze als Erker oberhalb der Schlackenabstichöffnung ausgebildet ist.

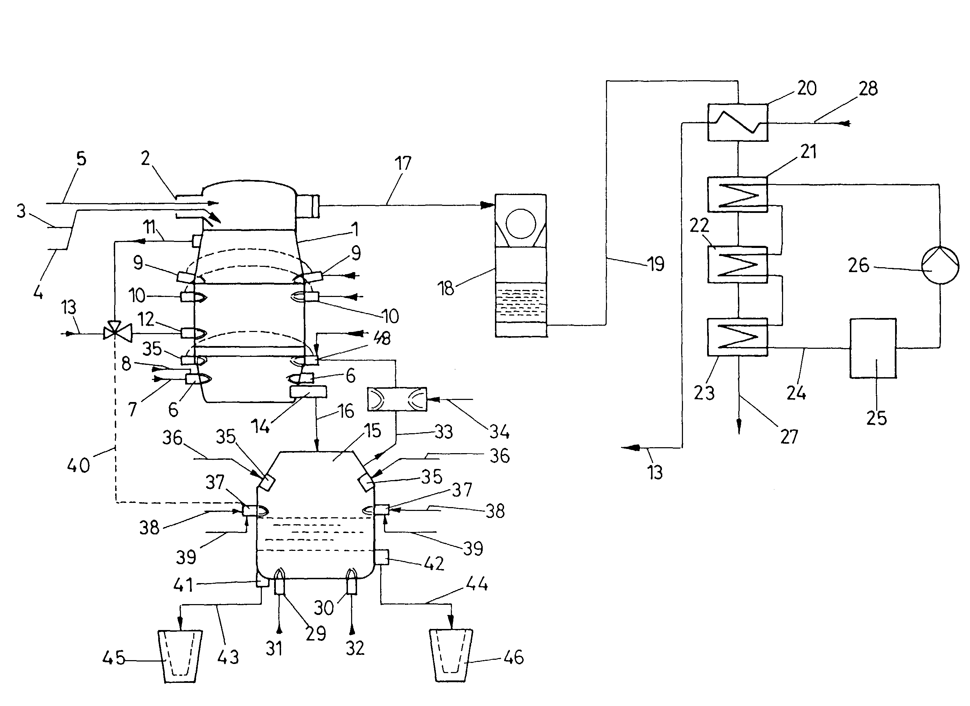

Die Erfindung wird nachfolgend an Hand eines in der Zeichnung schematisch dargestellten Ausführungsbeispieles näher erläutert.

In der Zeichnung ist mit 1 ein Festbett- bzw. Schmelzreaktor bezeichnet, in welchen über eine Öffnung 2 im Deckelbereich Schrott bzw. metallhaltige, müllähnliche Stoffe 3 sowie Kalk zur Einstellung einer Schlackenbasizität zwischen 1,8 und 3, insbesondere zwischen 2 und 2,2, sowie gegebenenfalls Kohle über 4 aufgegeben werden. Weiters ist eine Falschluftzufuhr mit 5 angedeutet. Die für das Aufschmelzen des eingesetzten Schrottes bzw. metallhaltigen Mülls erforderliche Prozeßwärme wird im unteren Bereich des Feststoff- bzw. Schmelzreaktors 1 durch Zufuhr von gasförmigen oder festen Brennstoffen zu Brennern 6 sichergestellt. Dabei ist eine Erdgaszufuhr mit 7 und eine Sauerstoffzufuhr mit 8 bezeichnet. Zur Einstellung der Verbrennungsstochiometrie wird weiters oberhalb der Schmelzzone Sekundärluft über Brenner 9 und 10 in unterschiedlichen Ebenen eingebracht. Zur Nutzung der bei der Vergasung des nichtmetallhaltigen Müllanteils anfallenden, staubbeladenen Abgase sowie zu einer Teilentsorgung derselben, werden im Bereich des Kopfes die Abgase über eine Leitung 11 zumindest teilweise abgezogen und im Unterteil des Schmelzreaktors über Brenner 12 diesem wiederum zugeführt, wobei eine zusätzliche Zufuhr von Treibgas mit 13 angedeutet ist. Die im Festbett- bzw. Schmelzreaktor 1 erzeugte Stahlschmelze sowie die anfallende Schlacke werden über den schematisch angedeuteten Austrag 14 in ein angeschlossenes Überhitzungs- bzw. Raffinationsgefäß 15 übergeführt, wobei dieses Raffinationsgefäß 15 über eine dichte Verbindung 16 mit dem Schmelzreaktor 1 bzw. dessen Austrag 14 verbunden ist.

Weiteres, bei der Verbrennung bzw. Vergasung von Schrott und/oder metallhaltigen, müllähnlichen Stoffen anfallendes Abgas wird über eine Leitung 17 aus dem Bereich des Kopfes des Schmelzreaktors 1 ausgetragen und einem Thermoreaktor 18 zugeführt, in welchem die in dem Abgas enthaltenen, organischen Schadstoffe nahezu quantitativ zersetzt werden. Das aus dem Thermoreaktor 18 austretende Gas wird über eine Leitung 19 Wärmetauschern 20 und Abhitzekesseln 21, 22 und 23 zugeführt und auf Temperaturen von unter 250°C abgekühlt, um eine Rekombination von Dioxinen bzw. Dibenzofuranen zu verhindern. Die Abhitzekessel 21, 22 und 23 sind hiebei als Wärmetauscher ausgebildet, wobei in den Kühlkreislauf 24 weiters ein Dampfumformer 25 sowie eine Pumpe 26 eingeschaltet sind. Das aus dem letzten Abhitzekessel 23 austretende Abgas wird über 27 in der Folge einer weiteren Abkühlung und Reinigung, beispielsweise in Filtern, zugeführt.

Im dem Thermoreaktor 18 nachgeschalteten ersten Wäarmetauscher 20 wird dabei über eine Leitung 28 zugeführtes Treibgas von einer Temperatur von beispielsweise etwa 100°C auf Temperaturen von beispielsweise etwa 600°C erwärmt und in weiterer Folge über die Leitung 13 dem Schmelzreaktor zugeführt.

Das aus dem Schmelzreaktor- 1 bei 14 abgezogene Bad aus Schmelze und Schlacke wird über im Deckel des Raffinationsgefäßes 15 geführte Kulissenschieber oder als Erker ausgebildete Einlaßöffnungen dem Raffinationsgefäß 15 zugeführt, wobei für eine Weiterbehandlung der Schmelze bei der dargestellten Ausführungsform über Bodendüsen 29 und 30 dem Raffinationsgefäß Kohlenstoff und gegebenenfalls Zuschläge über 31 sowie Sauerstoff über 32 zugeführt wird.

Da darauf abgezielt wird, im Raffinationsgefäß 15 neben einer Aufkohlung der Schmelze zur Einstellung eines Badkohlenstoffgehaltes zwischen 0,3 und 1,8 Gew.-%, vorzugsweise 0,5 bis 1 Gew.-%, auch eine Kohlevergasung vorzunehmen, so wird Kohlenstoff in einer entsprechenden Menge eingebracht, welche die für die gewünschte Aufkohlung erforderliche Menge übersteigt, wobei die Zufuhr von Sauerstoff ebenfalls auf diese zusätzliche Kohlevergasung abgestimmt wird. Das bei einer derartigen Kohlevergasung und bei der Behandlung der Schmelze im Raffinationsgefäß 15 entstehende Abgas wird über 33 abgezogen und gegebenenfalls nach Zusatz von Luft und/oder Sauerstoff 34 Brennern 48 im unteren Bereich des Schmelzreaktors 1 zugeführt, wobei den Brennern unmittelbar wiederum Luft und/oder Sauerstoff zugeführt werden kann. Bei geeigneter Verfahrensführung im Raffinationsgefäß 15 können dabei die den Brennern 6 zugeführten Brennstoffe zu einem Großteil von den aus dem Raffinationsgefäß 15 abgezogenen Abgasen 33 ersetzt werden.

Im oberen Bereich des Raffinationsgefäßes 15 sind weiters Nachverbrennungsdüsen 35 zum Einbringen von Luft und/oder Sauerstoff 36 sowie zusätzliche Brenner 37 zur Zufuhr von beispielsweise Erdöl oder Erdgas 38 und Luft und/oder Sauerstoff 39 vorgesehen. Den Brennern 37 kann darüberhinaus das über 11 abgezogene Abgas aus dem Schmelzreaktor 1 zugeführt werden, wie dies schematisch durch die Leitung 40 angedeutet ist.

Aus dem Raffinationsgefäß werden über verschließbare Abstichöffnungen 41 und 42 Rohstahl 43 sowie Schlacke 44 im Behälter 45 und 46 abgezogen.

Anstelle der Einbringung von Kohlenstoff und Sauerstoff über die Bodendüsen 29 und 30 in das Raffinationsgefäß 15 können auch im Deckel geführte Lanzen eingesetzt werden. Der für eine Aufkohlung notwendige Kohlenstoff kann darüberhinaus auch durch den Zusatz von Roheisen in den Schmelzreaktor oder in das Raffinationsgefäß eingebracht werden.

Es können mit der schematisch dargestellten Einrichtung im wesentlichen zwei unterschiedliche Verfahrensweisen durchgeführt werden. Falls lediglich darauf abgezielt wird, den FeO-Gehalt der Schlacke auf einen Wert zwischen 20 und 30 Gew.-% nach dem Frischprozeß einzustellen, können wesentlich geringere Mengen an Kohlenstoff zugesetzt werden. Durch einen Zusatz von beispielsweise 3 bis 18 kg, vorzugsweise 5 bis 10 kg, Kohlenstoff pro Tonne gelingt es, den FeO-Anteil in der Schlacke von ungefahr 60 bis 70 Gew.-% in einer endothermen Reaktion auf etwa 20 bis 30 Gew.-% abzusenken. Durch den Zusatz von Kohlenstoffträgern wird dabei der ursprüngliche Kohlenstoffgehalt des Einsatzmaterials von etwa 0,1 % Gew.-% in einen Bereich von 0,3 bis 1,8 Gew.-% angehoben und im nachfolgenden Frischprozeß wiederum auf einen Wert im Bereich des Ausgangswertes abgesenkt. Der Hauptteil der Kohlenstoffträger wird dabei mit dem Einsatzmaterial in den Schmelzreaktor durch Zusatz von Kohle oder Roheisen aufgegeben, wobei zur Korrektur bzw. Feineinstellung des Kohlenstoffgehaltes im Raffinationsgefäß zusätzlich über die Bodendüsen bzw. nicht näher dargestellte Lanzen weiterer Kohlenstoff und Sauerstoff eingebracht werden kann.

Neben der durch die Aufkohlung des Bades vor dem Frischen durch Zusatz von Kohlenstoff bewirkten Verringerung des FeO-Gehaltes in der Schlacke sowie einer Reduktion des Eisenabbrandes beim Frischen kann im Raffinationsgefäß durch Einsatz einer die Menge für die Aufkohlung übersteigenden Menge von Kohlenstoff hochreines Gas in einer Vergasungsreaktion erzeugt werden, welches weitestgehend den Einsatz von zusätzlichen Brennstoffen, wie beispielsweise Erdgas, im Schmelzreaktor ersetzen kann. Zu diesem Zweck werden beispielsweise etwa 70 kg Kohlenstoff pro Tonne in den Schmelzreaktor aufgegeben und durch entsprechenden Einsatz einer größeren Menge von Sauerstoff der die für eine Aufkohlung notwendige Menge übersteigende Mengenanteil Kohlenstoff vergast, wobei in diesem Fall eine exotherme Reaktion abläuft. Der Kohlenstoffgehalt des Einsatzmaterials wird dabei ähnlich wie bei der vorangehenden Verfahrensweise nach der Vergasungsreaktion auf etwa 0,3 bis 1,8 Gew.-%, vorzugsweise 0,5 bis 1 Gew.-%, angehoben und im nachfolgenden Frischprozeß wiederum auf einen dem Ausgangswert im wesentlichen entsprechenden Kohlenstoffgehalt abgesenkt. Auch in diesem Fall wird der Großteil der benötigten Kohlenstoffmenge mit der Charge aufgegeben und über Bodendüsen oder Lanzen über Raffinationsgefäße die entsprechend günstigsten Verfahrensparameter eingestellt bzw. aufrechterhalten.

## Patentansprüche

1. Verfahren zum Erschmelzen von Stahl aus Schrott und/oder metallhaltigen, müllähnlichen Stoffen, wobei die Metallträger (3) in einem Festbett (1) eines Schmelzreaktors vorgewärmt und aufgeschmolzen werden, die Schmelze in ein Raffinationsgefäß (15) übergeführt wird und der C-Gehalt der Schmelze durch Zusatz von Kohlenstoff oder Kohlenstoffträgern (4,31) angehoben wird, dadurch gekennzeichnet, daß im Schmelzreaktor (1) eine Schlackenbasizität zwischen 1,8 und 3 eingestellt wird und daß in die Schmelze Kohlenstoff (4) in einer die Menge für die gewünschte Aufkohlung übersteigenden Menge und Sauerstoff (8) eingebracht wird und daß überschüssiger Kohlenstoff vergast wird.

2. Verfahren nach Anspruch 1, dadurch gekennzeichnet, daß die Schlackenbasizität zwischen 2 und 2,2 eingestellt wird.

3. Verfahren nach Anspruch 1 oder 2, dadurch gekennzeichnet, daß der C-Gehalt der Schmelze durch Zusatz von Roheisen angehoben wird.

4. Verfahren nach Anspruch 1, 2 oder 3, dadurch gekennzeichnet, daß das gebildete Kohlevergasungsprodukt als Brenngas für das Vorwärmen und Aufschmelzen des Festbettes (1) eingesetzt wird.

5. Verfahren nach einem der Ansprüche 1 bis 4, dadurch gekennzeichnet, daß Kohlenstoff (4) in die Schmelze in einer Menge eingebracht wird, die nach Ablauf der Vergasungsreaktion einen Badkohlenstoffgehalt zwischen 0,3 Gew.-% und 1,8 Gew.-% ergibt.

6. Verfahren nach Anspruch 5, dadurch gekennzeichnet, daß Kohlenstoff (4) in die Schmelze in einer Menge eingebracht wird, die nach Ablauf der Vergasungsreaktion einen Badkohlenstoffgehalt zwischen 0,5 Gew.-% und 1 Gew.-% ergibt.

7. Verfahren nach Anspruch 5 oder 6, dadurch gekennzeichnet, daß Kohlenstoff (4) in die Schmelze in einer Menge eingebracht wird, die nach Ablauf der Vergasungsreaktion einen Badkohlenstoffgehalt zwischen 0,7 Gew.-% bis 1 Gew.-% ergibt.

8. Verfahren nach einem der Ansprüche 1 bis 7, dadurch gekennzeichnet, daß nach Beendigung der Vergasungsreaktion im Frischprozeß der FeO-Gehalt der Schlacke zwischen 20 und 30 Gew.-% durch Aufkohlung eingestellt wird.

9. Verfahren nach einem der Ansprüche 1 bis 8, dadurch gekennzeichnet, daß das Raffinationsgefäß (15) durch, insbesondere über der Schmelze angeordnete, Brenner (35,37) beheizt wird.

10. Einrichtung zur Durchführung des Verfahrens nach einem der Ansprüche 1 bis 9, mit einem Schmelzreaktor (1) zum Aufschmelzen der Einsatzstoffe, wobei ein Raffinationsgefäß (15) dicht mit dem Schmelzreaktor (1) verbunden ist, dadurch gekennzeichnet, daß im oberen Bereich des Raffinationsgefäßes (15) in wenigstens einer Ebene Brenner (37) und/oder Nachverbrennungsdüsen (35) angeordnet sind.

11. Einrichtung nach Anspruch 10, dadurch gekennzeichnet, daß an das Raffinationsgefäß (15) eine Gasrückführungsleitung (33) angeschlossen ist, welche mit den Brennern (35) des Schmelzreaktors (1) verbindbar ist.

12. Einrichtung nach Anspruch 10 oder 11, dadurch gekennzeichnet, daß das Raffinationsgefäß (15) wenigstens eine mit einem Verschluß ausgestattete Abstichöffnung (41,42) aufweist.

13. Einrichtung nach Anspruch 10, 11 oder 12, dadurch gekennzeichnet, daß die Einlaßöffnung des Raffinationsgefäßes (15) für die Schmelze als im Deckel geführter Kulissenschieber ausgebildet ist.

14. Einrichtung nach Anspruch 10, 11 oder 12, dadurch gekennzeichnet, daß die Einlaßöffnung des Raffinationsgefäßes (15) für die Schmelze als Erker oberhalb der Schlackenabstichöffnung ausgebildet ist.

## Claims

1. A process for melting steel from scrap and/or metal-containing waste-like products by preheating and melting the metal carriers (3) in a fixed bed (1) of a melting reactor, transferring the melt into a refining vessel (15) and raising the C-content of the melt by adding carbon or carbon carriers (4, 31), characterized in that a slag basicity ranging between 1.8 and 3 is adjusted in the melting reactor (1) and that carbon (4) in an amount exceeding the amount necessary for the desired carburization and oxygen (8) are introduced into the melt and excess carbon is gasified.

2. A process according to claim 1, characterized in that the slag basicity is adjusted between 2 and 2.2.

3. A process according to claim 1 or 2, characterized in that the C-content of the melt is raised by adding pig iron.

4. A process according to claim 1, 2 or 3, characterized in that the coal gasification product formed is used as a combustion gas for preheating and melting said fixed bed (1).

5. A process according to any one of claims 1 to 4, characterized in that carbon (4) is introduced into the melt in an amount which, upon termination of the gasification reaction, yields a carbon content of the bath ranging between 0.3 % by wt. and 1.8 % by wt.

6. A process according to claim 5, characterized in that carbon (4) is introduced into the melt in an amount which, upon termination of the gasification reaction, yields a carbon content of the bath ranging between 0.5 % by wt. and 1 % by wt.

7. A process according to claim 5 or 6, characterized in that carbon (4) is introduced into the melt in an amount which, upon termination of the gasification reaction, yields a carbon content of the bath ranging between 0.7 % by wt. and 1 % by wt.

8. A process according to any one of claims 1 to 7, characterized in that, upon completion of the gasification reaction, the FeO content of the slag in the refining process is adjusted by carburization to range between 20 and 30 % by wt.

9. A process according to any one of claims 1 to 8, characterized in that the refining vessel (15) is heated by burners (35, 37) arranged, in particular, above the melt.

10. An arrangement for carrying out the process according to any one of claims 1 to 9, comprising a melting reactor (1) for melting the charging substances with a refining vessel (15) being tightly connected with the melting reactor (1), characterized in that burners (37) and/or afterburning nozzles (35) are arranged in the upper region of the refining vessel (15) in at least one plane.

11. An arrangement according to claim 10, characterized in that a gas return duct (33) is connected to the refining vessel (15), said gas return duct being connectable with the burners (35) of the melting reactor (1).

12. An arrangement according to claim 10 or 11, characterized in that the refining vessel (15) comprises at least one tap opening (41, 42) provided with a closure.

13. An arrangement according to claim 10, 11 or 12, characterized in that the inlet opening of the refining vessel (15) for the melt is configured as a link slide guided in the lid.

14. An arrangement according to claim 10, 11 or 12, characterized in that the inlet opening of the refining vessel (15) for the melt is configured as an oriel provided above the slag tap opening.

## Revendications

1. Procédé destiné à l'elaboration de l'acier à partir de ferrailles et/ou de rebuts contenant des métaux, les composés métalliques (3) étant préchauffés et fondus dans un lit fixe (1) d'un réacteur de fusion, la masse fondue étant transférée dans un récipient de raffinage (15) et la teneur en carbone de la masse fondue étant augmentée par l'addition de carbone ou de vecteurs de carbone (4,31), caractérisé en ce que la basicité des scories dans le réacteur de fusion (1) est régulée entre 1,8 et 3 et en ce que l'on introduit dans la masse en fusion, du carbone (4)dans une quantité supérieure à la quantité nécessaire pour la cémentation souhaitée, et de l'oxygène (8) et en ce que le carbone excédentaire est gazéifié.

2. Procédé selon la revendication 1, caractérisé en ce que la basicité des scories est régulée entre 2 et 2,2.

3. Procédé selon la revendication 1 ou 2, caractérisé en ce que la teneur en carbone de la masse fondue est augmentée par l'addition de fonte brute.

4. Procédé selon la revendication 1, 2 ou 3, caractérisé en ce que le produit de gazéification du carbone formé est utilisé en tant que gaz de combustion pour le préchauffage et la fusion du lit fixe (1).

5. Procédé selon l'une quelconque des revendications 1 à 4, caractérisé en ce que la quantité de carbone (4) introduite dans la masse fondue est telle que la teneur en carbone du bain, obtenue à la fin de la réaction de gazéification, est comprise entre 0,3 % pondéral et 1,8 % pondéral.

6. Procédé selon la revendication 5, caractérisé en ce que la quantité de carbone (4) introduite dans la masse fondue est telle que la teneur en carbone du bain, obtenue à la fin de la réaction de gazéification, est comprise entre 0,5 **%** pondéral et 1 % pondéral.

7. Procédé selon la revendication 5 ou 6, caractérisé en ce que la quantité de carbone (4) introduite dans la masse fondue est telle que la teneur en carbone du bain, obtenue à la fin de la réaction de gazéification, est comprise entre 0,7 % pondéral et 1 % pondéral.

8. Procédé selon l'une quelconque des revendications 1 à 7, caractérisé en ce que la teneur en FeO des scories dans le processus d'affinage, à la fin de la réaction de gazéification, est régulée par carburation entre 20 et 30 % pondéral.

9. Procédé selon l'une quelconque des revendications 1 à 8, caractérisé en ce que le récipient de raffinage (15) est chauffé par l'intermédiaire de brûleurs (35, 37) disposés en particulier au-dessus de la masse fondue.

10. Dispositif pour la mise en oeuvre du procédé selon l'une quelconque des revendications 1 à 9, comprenant un réacteur de fusion (1) pour l'élaboration des matériaux utilisés, un récipient de raffinage (15) communiquant étroitement avec le réacteur de fusion (1), caractérisé en ce qu'au moins un plan de brûleurs (37) et/ou des buses de postcombustion (35) sont montés dans la partie supérieure du récipient de raffinage (15).

11. Dispositif selon la revendication 10, caractérisé en ce qu'une conduite de retour du gaz (33) est raccordée au récipient de raffinage (15), laquelle peut être reliée aux brûleurs (35) du réacteur de fusion (1).

12. Dispositif selon la revendication 10 ou 11, caractérisé en ce que le récipient de raffinage (15) comprend au moins un trou de percée (41, 42), muni d'un système de fermeture.

13. Dispositif selon la revendication 10, 11 ou 12, caractérisé en ce que l'orifice d'entrée du récipient de raffinage (15) pour la masse fondue est formé comme une barre à coulisse guidée dans le couvercle.

14. Dispositif selon la revendication 10, 11 ou 12, caractérisé en ce que l'orifice d'entrée du récipient de raffinage (15) pour la masse fondue est formé comme un porte-à-faux au-dessus du trou de percée pour les scories.
